# EUROPÄISCHE PATENTSCHRIFT

(11) **EP 0 710 323 B1**
(45) Veröffentlichungstag und Bekanntmachung des Hinweises auf die Patenterteilung: **19.03.1997**
(21) Anmeldenummer: 94919630.7
(22) Anmeldetag: 14.06.1994
(51) Int. Cl.: F01N 3/08, F01N 3/20

(54) **VERFAHREN UND EINRICHTUNG ZUR REINIGUNG VON ABGASEN VON BRENNKRAFTMASCHINEN UND KRAFTFAHRZEUG MIT EINER DERARTIGEN EINRICHTUNG**
PROCESS AND DEVICE FOR CLEANING EXHAUST GAS OF INTERNAL COMBUSTION ENGINES AND MOTOR VEHICLE PROVIDED WITH SUCH A DEVICE
PROCEDE ET DISPOSITIF D'EPURATION DES GAZ D'ECHAPPEMENT DE MOTEURS A COMBUSTION INTERNE ET VEHICULE A MOTEUR POURVU D'UN TEL DISPOSITIF

(30) Priorität: 22.07.1993 DE 4324652
(43) Veröffentlichungstag der Anmeldung: 08.05.1996
(73) Patentinhaber: MASCHINEN- UND ANLAGENBAU GRIMMA GMBH (MAG), D-04668 Grimma (DE)
(72) Erfinder: WENSKE, Hanno, D-04668 Grimma (DE)
(74) Vertreter: Klitzsch, Gottfried
(86) Internationale Anmeldenummer: EP9401932
(87) Internationale Veröffentlichungsnummer: WO9503480

(56) Entgegenhaltungen:
- DE-A- 4 237 184
- US-A- 3 779 014
- US-A- 5 272 871

## Beschreibung

Die Erfindung betrifft ein Verfahren und eine Einrichtung zur Reinigung der Abgase von Brennkraftmaschinen sowie ein Kraftfahrzeug mit einer derartigen Einrichtung, wobei durch die Abgasreinigung der Anteil an Stickoxiden im Abgas drastisch reduziert werden soll.

Durch den Einsatz geregelter Katalysatoren sind in der jüngsten Vergangenheit bedeutende Fortschritte auf dem Gebiet der Reinigung der Abgase der Verbrennungsmotoren von Kraftfahrzeugen erzielt worden. Bei Dieselmotoren hat der Einsatz von Rußfiltern zu einer Verringerung der nach außen tretenden Rußpartikel geführt.

Während die bisherige Katalysatortechnik zu einer beträchtlichen Schadstoffreduzierung im Bereich von C0, CO₂ sowie HC geführt hat, wird es zukünftig besonders darauf ankommen, die NO_{X}-Emissionen, insbesondere in der Kaltstartphase des Motors, weiter deutlich zu vermindern.

Im Stand der Technik ist es bereits bekannt, die besonders gute Wirkung von Wasserstoff als Spalter von Stickoxiden für die Abgasreinigung nutzbar zu machen. Andererseits bereitet die zuverlässige Bereitstellung von Wasserstoff als Redoxmittel für die Reduktion der Stickoxide aufgrund der Neigung von Wasserstoff, explosible Gemische zu bilden, gewisse Schwierigkeiten.

Es ist daher bekannt, aus entsprechenden Vorratsbehältern Wasserstoff in gebundener Form, insbesondere als Ammoniak, dem Verbrennungsprozeß oder dem Verbrennungsabgas zuzusetzen, um hierdurch den Stickoxidanteil zu reduzieren (vgl. z.B. EP-A-0 082 141, EP-A-0 381 236, EP-A-0 527 362).

Dieses Verfahren ist allerdings in seiner Realisierung verhältnismäßig aufwendig und vermag auch hinsichtlich seines Wirkungsgrades vor dem Hintergrund der sich beständig verschärfenden Bestimmungen und der Senkung von Grenzwerten zulässiger NOₓ-Emissionen nicht zu befriedigen.

Es ist überdies auch bekannt, Gasmotoren durch die Verwendung eines Gemisches aus Wasserstoff, Auspuffgas und Umgebungsluft zu betreiben (EP-A-0 086 439) oder Wasserstoff einem Luft-Kraftstoff-Gemisch zuzusetzen (EP-A-0 006 687). Für den Einsatz als Brennstoff eines Verbrennungsmotors ist es bekannt, Wasserstoff auch direkt an Bord des Kraftfahrzeuges elektrolytisch zu erzeugen (EP-A-0 207 122).

Hierbei wird der erzeugte Wasserstoff allerdings lediglich als Energieträger für den Verbrennungsprozeß selbst verwendet.

Es ist auch bekannt, Wasserstoff zur Stickoxidspaltung der Abgase einer Brennkraftmaschine einzuspeisen (DE-A-42 37 184). Dieser Wasserstoff kann auch elektrolytisch erzeugt werden (US-PS 3 779 014).

Der Erfindung liegt demgegenüber die Aufgabe zugrunde, ein Verfahren und eine Einrichtung zur Reinigung von Abgasen von Brennkraftmaschinen sowie ein Kraftfahrzeug mit einer derartigen Einrichtung anzugeben, das bzw. die eine drastische Verminderung der NOₓ-Emission gestatten und bei denen die Bereitstellung des Wasserstoffes zur Einspeisung in das Abgassystem der Brennkraftmaschine verbessert ist.

Hinsichtlich des Verfahrens wird die vorerläuterte Aufgabe durch ein Verfahren der eingangs genannten Art erfindungsgemäß dadurch gelöst, daß Wasserstoff und Sauerstoff in einer unteren Elektrolysezelleneinheit erzeugt und durch eine über der Elektrolysezelleneinheit befindliche Elektrolytspeichereinheit hindurch in einen mit separierten Gasausgängen verbundenen, elektrolytfreien Raum des Elektrolyseurs geführt werden.

Durch dieses Verfahren kann auf den Einsatz gefährdender Wasserstoffbehälter an Bord des Kraftfahrzeuges ebenso verzichtet werden, wie auf den weniger effektiven Einsatz bereits gebundenen Wasserstoffes in Form von Harnstoff oder Ammoniak zur Spaltung der Stickoxide. Überdies ermöglicht dieses Verfahren eine jeweils an den Motorlauf gekoppelte, mobile Erzeugung des benötigten Wasserstoffs und seine Einspeisung in das Abgassystem der Brennkraftmaschine, so daß die im Abgas enthaltenen Stickoxide in Stickstoff und Wasserdampf gespalten und an die Umgebung abgegeben werden. Das gegebenenfalls unter Verwendung von Wasser als Elektrolyt in der Elektrolysezelle ablaufende Verfahren kann nicht nur unter Einspeisung des elektrolytisch erzeugten Wasserstoffs in das Abgassystem durchgeführt werden, sondern auch zur Verwendung des bei der Elektrolyse entstehenden Sauerstoffs zur zusätzlichen Förderung des Verbrennungsprozesses unter Steuerung des Luft-Kraftstoff-verhältnisses oder zur verbesserten Trocknung der in einem Rußfilter befindlichen Rußpartikel durch Einspeisen des Sauerstoffs in diesen (bei Dieselmotoren) bzw. zur Verbesserung der Aufwärmung eines Katalysators durch zusätzliche Sauerstoffbereitstellung führen.

Es wurde im übrigen bei Dieselmotoren gefunden, daß die Anwesenheit von Rußpartikeln den Spaltungvorgang der Stickoxide bei Einspeisung von elektrolytisch erzeugtem Wasserstoff in das Abgas deutlich verbessert und die Rußpartikel hierbei als Katalysator wirken.

Hinsichtlich einer Einrichtung zum Reinigen der Abgase von Verbrennungsmaschinen, insbesondere zum Abbau von Stickoxiden, ist die Einrichtung der vorgenannten Art mit einem Elektrolyseur mit zumindest einer Elektrolysezelle zur Wasserstofferzeugung erfindungsgemäß dadurch gekennzeichnet, daß der Elektrolyseur eine untere Elektrolysezelleneinheit und oberhalb derselben eine Elektrolytspeichereinheit aufweist.

Die Einrichtung weist somit den Elektrolyseur mit einer Elektrolytzelleneinheit und oberhalb derselben mit einer Elektrolytspeichereinheit auf, die ihrerseits vorzugsweise vertikal geteilt ist, zur separaten Abführung von Wasserstoff und Sauerstoff, die in der Elektrolysezelleneinheit erzeugt werden.

Durch direkte Einspeisung des Wasserstoffes in den Abgasstrom, die auch bereits erfolgt, bevor ein gegebenenfalls vorgesehener Katalysator seine Betriebstemperatur erreicht, wird eine optimale Reduktion des NOₓ zu N₂ und H₂O (Dampf) und damit eine drastische Verminderung der NOₓ-Schadstoffe im Abgas erreicht.

Nach einem bevorzugten Ausführungsbeispiel der Erfindung mündet die mit dem Wasserstoff abführenden Teil des Elektrolyseurs verbundene Wasserstoff leitung stromauf eines gegebenenfalls vorgesehenen Turboladers oder Katalysators in die Abgasleitung, Insbesondere im Bereich eines Abgaskrümmers der Brennkraftmaschine. Der im Elektrolyseur entstehende Sauerstoff kann vorzugsweise entweder in den Luftansaug- bzw. Gemischbildungsbereich der Brennkraftmaschine oder direkt in den Verbrennungsraum oder in ein Luftreservoir zur direkten Lufteinspritzung oder Speisung einer Luft/Kraftstoff-Einspritzeinheit eingeführt werden, oder kann zur rascheren Erwärmung eines gegebenenfalls im Abgassystem vorgesehenen Katalysators verwendet und somit ebenfalls in das Abgassystem eingeführt werden.

Nach einer weiteren, bevorzugten Ausführungsform der Einrichtung weist die Elektrolytspeichereinheit ein schwimmmerventil zur Füllstandsbegrenzung von Elektrolyt auf.

Vorzugsweise wird Wasser oder eine wässrige KOH-Lösung als Elektrolyt verwendet und elektrolytisch in Wasserstoff und Sauerstoff zerlegt, wobei in diesem Fall der Elektrolyseur in einen Kühlwasserkreislauf der Brennkraftmaschine eingebunden ist, und durch diesen auch die Betriebstemperatur des Elektrolyseurs geregelt wird.

Vorzugsweise ist in der Elektrolytspeichereinheit eine Schlingerschutzeinrichtung in Gestalt Kapillarspalte bildender, vertikal angeordneter Platten vorgesehen, um eine Schlingerbewegung des Elektrolyten, die durch Fahrzeugbewegungen verursacht wird, möglichst zu unterdrückten. Hierfür kann nach einer weiteren vorteilhaften Ausführungsform der Erfindung auch eine Siebstruktur verwendet werden. Wesentlich ist jeweils ein möglichst ungehinderter, vertikaler Gastransport durch diesen Bereich.

Nach einer weiteren, bevorzugten Ausführungsform der Einrichtung weist die Kapillarspalte aufweisende Schlingerschutzeinrichtung hydrophobe, im wesentlichen elektrolytfreie Gastransportbereiche auf.

Nach noch einer weiteren, bevorzugten Ausführungsform der Einrichtung ist die Elektrolysezelleneinheit aus zumindest einer Kapillarspaltelektrode, vorzugsweise aus einer Vielzahl Paketförmig angeordneter Kapillarspaltelektroden gebildet, die Mittel zur separaten Führung von Elektrolyt und Reaktionsgas, insbesondere einen elektrolytisch aktiven, hydrophilen Reaktionsbereich der Elektrode benachbart zu einem Separatcr und einen elektrolytisch inaktiven, hydrophoben Gastransportbereich an einem beabstandet zu dem Separator vorgesehenen, von diesem abgewandten Elektrodenabschnitt aufweist.

Die vorgenannte Aufgabe, ein Kraftfahrzeug anzugeben, dessen Stickoxidanteil im Abgas der Brennkraftmaschine des Kraftfahrzeuges wesentlich reduziert ist, wobei das Kraftfahrzeug einen Elektrolyseur zur elektrolytischen Wasserstofferzeugung mitführt, der auslaßseitig mit dem Abgassystem der Brennkraftmaschine verbunden ist, wird erfindungsgemäß dadurch gelöst, daß der Elektrolyseur horizontal in eine untere Elektrolysezelleneinheit und eine obere Elektrolytspeichereinheit unterteilt ist und die Elektrolysezelleneinheit zumindest eine Kapillarspaltelektrode, die mit Mitteln zur separaten Führung von Elektrolyt und Reaktionsgas versehen ist, aufweist.

Die Wasserstoffleitung mündet in eine Abgasleitung des Abgassystems stromauf eines Abgasturboladers und/oder eines Katalysators, um hierdurch die Stickoxide im wesentlichen vollständig zu reduzieren und zu Stickstoffgas und Wasserdampf zu spalten. Der Elektrolyseur verwendet vorzugsweise Wasser oder eine wässrige KOH-Lösung als Elektrolyten und kann vorzugsweise in den Motorkühlkreislauf der Brennkraftmaschine integriert sein und ist vorzugsweise benachbart zu der Brennkraftmaschine im Kraftfahrzeug angeordnet. Auf diese Weise kann auch die Betriebstemperatur des Elektrolyseurs durch die Kühlwassertemperatur im Kühlkreislauf der Brennkraftmaschine geregelt werden.

Vorzugsweise ist der Elektrolyseur in eine obere Elektrolytspeichereinheit und in eine untere Elektrolysezelleneinheit, die von der Elektrolytspeichereinheit mit Elektrolyt versorgt wird, unterteilt, wobei die Elektrolytspeichereinheit ihrerseits vertikal in eine Elektrolyt-/Gas-Führungsanordnung für Sauerstoff mit einem Demister und eine Elektrolyt-/Gas-Führungsanordnung für Wasserstoff ebenfalls mit einem Demister unterteilt ist.

Nach einer weiteren, bevorzugten Ausführungsform weist die Elektrolytspeichereinheit eine Füllstandsregeleinrichtung für den Elektrolyten, vorzugsweise in Gestalt eines Schwimmerventiles, auf.

Der bei der bordeigenen, elektrolytischen Wasserstofferzeugung anfallende Sauerstoff kann vorzugsweise in das Verbrennungsluft-Ansaugrohr der Brennkraftmaschine zur Unterstützung der Gemischbildung oder kann in Abhängigkeit von der Gemischbildungseinrichtung auch direkt in eine Verbrennungskammer der Brennkraftmaschine bzw. ein entsprechendes Luftreservoir, z.B. bei separater Lufteinspritzung oder für die Speisung einer Luft/Kraftstoff-Einspritzeinheit rückgeführt werden.

Nach noch einem bevorzugten Ausführungsbeispiel der Erfindung kann die Sauerstoffleitung von dem Demister des Elektrolyseurs auch zu einem bei Dieselmotoren im Abgassystem vorgesehenen Rußfilter geführt werden, um zur raschen Trocknung der Rußpartikel beizutragen, die zugleich eine Katalysatorfunktion hinsichtlich der Stickoxidreinigung des Abgases durch das in das Abgassystem direkt eingeführte Wasserstoffgas haben.

Nach einem weiteren, bevorzugten Ausführungsbeispiel des Kraftfahrzeuges nach der vorliegenden Erfindung ist in der Elektrolytspeichereinheit des Elektrolyseurs eine poröse, gas- und flüssigkeitspermeable Schlingerschutzeinrichtung vorgesehen, um Elektrolytbewegungen in dem Elektrolyseur aufgrund von Fahrzeugbewegungen möglichst zu dämpfen und den Flüssigkeitskörper in äußerstem Maße zu unterteilen. Vorzugsweise kann diese Schlingerschutzeinrichtung aus einer oder mehreren vertikalen Plattenanordnungen bestehen, die Kapillarspalte bilden und eine vertikale Gasführung gestatten. Diese Kapillarstruktur kann vorzugsweise auch durch hydrophobe Beschichtung entsprechende, im wesentlichen elektrolytfreie Räume als Gastransportbereiche aufweisen, um eine ungehinderte Abführung des in der Elektrolysezelleneinheit erzeugten Sauerstoff- und Wasserstoffgases zu unterstützen.

Nach noch einem weiteren Ausführungsbeispiel des Kraftfahrzeuges nach der vorliegenden Erfindung weist die Elektrolysezelleneinheit des Elektrolyseurs zumindest eine Kapillarspaltelektrode, vorzugsweise eine Vielzahl von Kapillarspaltelektroden auf, die mit Mitteln zur separaten Führung von Elektrolyt und Reaktionsgas versehen ist, wobei die Kapillarspaltelektrode zumindest einen hydrophilen, elektrolytisch aktiven Reaktionsbereich und einen hydrophoben, elektrolytisch inaktiven Gastransportbereich aufweist, wobei der hydrophile Reaktionsbereich benachbart zu einem Separator einen diesem zugewandten Elektrodenabschnitt und der Gastransportbereich einen beabstandet zu dem Separator, von diesem abgewandten Elektrodenabschnitt bildet.

Vorzugsweise wird der Elektrolyseur, genauer die Elektrolysezelleneinheit desselben, über die bordeigene Lichtmaschine betrieben, wobei die von der Lichtmaschine abgegebene Spannung gleichgerichtet wird.

Weitere, bevorzugte Ausführungsbeispiele des Erfindungsgegenstandes sind in den übrigen Unteransprüchen dargelegt.

Die Erfindung wird nachstehend anhand von Ausführungsbeispielen und zugehörigen Zeichnungen näher erläutert. In diesen zeigen:
- Fig. 1: einen Elektrolyseur zur Verwendung in einem Kraftfahrzeug in schematischer Schnittdarstellung,
- Fig. 2: eine schematische Darstellung des Einsatzes eines Elektrolyseurs nach Fig. 1 in Verbindung mit einer Brennkraftmaschine eines Kraftfahrzeuges, und
- Fig. 3: eine alternative Ausführungsform zum Einsatz des Elektrolyseurs nach Fig. 2.

Grundlage der Erfindung in ihren verschiedenartigsten Modifikationen und Ausführungsmöglichkeiten ist die elektrolytische Erzeugung von Wasserstoff durch eine oder mehrere Elektrolysezellen an Bord eines Kraftfahrzeuges und die direkte Vermischung von Wasserstoff und Abgas zur Spaltung von NOₓ in N₂ und H₂O (Dampf), d.h. die unmittelbare Verwendung von Wasserstoff als Reduktionsmittel im Abgas der Brennkraftmaschine.

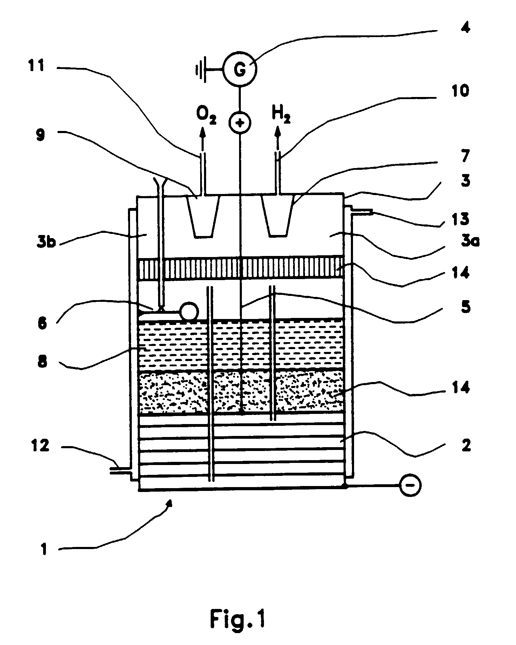

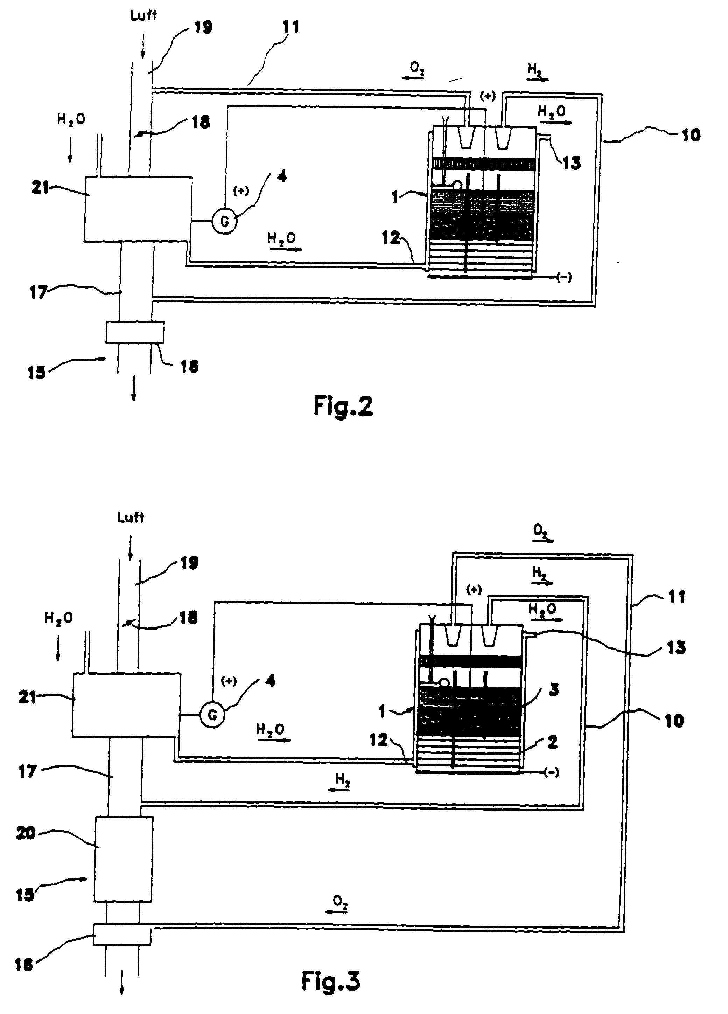

Fig. 1 zeigt im Querschnitt einen Elektrolyseur nach einem bevorzugten Ausführungsbeispiel, der für den mobilen Einsatz als Bordgerät eines Kraftfahrzeuges und in Verbindung mit einer Brennkraftmaschine (s. Fig. 2 und 3) angeordnet werden soll.

Der Elektrolyseur 1 dient der Erzeugung von Wasserstoff H₂ insbesondere durch Elektrolyse von Wasser oder wässriger KOH oder NaCl-Lösung als Elektrolyt, um sodann diesen Wasserstoff in das Abgassystem einer Brennkraftmaschine als Reduktionsmittel einzuspeisen. Der Elektrolyseur 1 besteht in vertikaler Anordnung aus der unteren Elektrolysezelleneinheit 2 und der oberen Elektrolytspeichereinheit 3. In der Elektrolysezelleneinheit 2 befinden sich im gemeinsamen Elektrolytbad eine Mehrzahl von, gegebenenfalls durch Separatoren getrennte Anoden/Kathoden-Kombinationen als Elektroden, zwischen denen eine elektrische Spannung, die gleichgerichtet von einer Lichtmaschine 4 der Brennkraftmaschine bezogen wird, angelegt wird, ohne daß dies hier im einzelnen dargestellt ist. Die Anoden der Elektroden der Elektrolysezelleneinheit 2 sind an den Plus-Pol der Lichtmaschine 4 geschaltet, während die Kathoden als Minus-Pol der Elektrolysezelleneinheit 2 an Masse gelegt sind. Einzelheiten der Gasfangeinrichtung über den Anoden und Kathoden zur separaten Sammlung und Zusammenführung des an der Anode entstehenden Sauerstoffs bzw. des an den Kathoden entstehenden Wasserstoffs sind hier nicht näher gezeigt. Beispielsweise kann die Elektrolysezelleneinheit aus Kapillarspaltelektroden bestehen, wie in der WO 93/00459 dargestellt. Derartige Kapillarspaltelektroden weisen einen hydrophilen, elektrolytisch aktiven Reaktionsbereich in Kontakt mit einem Separator zwischen Kathode und Anode sowie einen hydrophoben, elektrolytisch inaktiven Gassammelbereich im nach außen gewandten Elektrodenteil auf und weisen neben hoher Leistungsfähigkeit und mechanischer Stabilität eine besonders vorteilhafte Gastransportkapazität und äußerst geringen Gasströmungswiderstand auf.

Die im oberen Bereich des Elektrolyseurs 1 vorgesehene Elektrolytspeichereinheit 3, die gas- und flüssigkeitsdurchlässig für die Gas- und Elektrolytkommunikation mit der Elektrolysezelleneinheit 2 verbunden ist, ist durch eine vertikale Trennwand 5 in einen, in Fig. 1 rechtsseitigen Elektrolyt-/Gas-Führungsteil 3a zur Wasserstoffabführung und in einen - in Fig. 1 linksseitigen - Elektrolyt-/Gas-Führungsteil 3b zur Abführung des erzeugten Sauerstoffes unterteilt und mit Elektrolyt 8, insbesondere Wasser oder wässrige Kaliumlauge, gefüllt. Der Elektrolytstand wird über ein Schwimmerventil 6 geregelt und die Abteile 3a, 3b sind kommunizierend miteinander verbunden, so daß jederzeit eine hinreichende Menge an flüssigem Elektrolyt 8 in dem Elektrolyseur 1 oberhalb der Elektrolysezelle 2 und in Fluidverbindung mit dieser zur Verfügung steht.

Am oberen Ende der Elektrolytspeichereinheit 3 befindet sich in jeder Kammer 3a, 3b ein Flüssigkeitsabscheider, d.h. ein Demister 7 und ein Demister 9, aus denen der Wasserstoff und der Sauerstoff über eine Wasserstoff leitung 10 bzw. eine Sauerstoffleitung 11 abgeführt werden.

Zur Speisung des Elektrolyseurs 1 mit Elektrolytflüssigkeit ist dieser in den Wasser-Kühlkreislauf der Brennkraftmaschine einbezogen, wobei eine Kühlwasserzuleitung 12 in die Kammer 3b mündet, während eine Kühlwasserabführleitung 13 aus der der Wasserstoffabführung dienenden Kammer 3a zurück zum Kühlkreislauf herausgeführt ist.

Um im Hinblick auf Bewegungen des Fahrzeugkarosserie für eine möglichst geringe Bewegung des Elektrolyt-Flüssigkeitskörpers in der Elektrolytspeichereinheit 3 zu sorgen, weist diese in beiden Teilen 3a, 3b eine Schlingerschutzeinrichtung in Gestalt von zumindest teilweise Kapillarspalte bildenden Plattenanordnungen 14 auf, die, wie in Fig. 1 gezeigt, auch vertikal beabstandet vorgesehen sein können und überdies eine Gasleitfunktion für die Führung des Sauerstoffs bzw. Wasserstoffs in die Demister 7, 9 übernehmen können. Durch diese Plattenanordnungen 14 wird der Elektrolyt in einzelne Elemente unterteilt, so daß auch Neigungen der Fahrzeugkarosserie nicht zu Beeinträchtigungen in der Arbeitsweise des Elektrolyseurs 1 führen. Die als Schlingersieb wirksamen Plattenanordnungen 14 können überdies eine hydrophobe, elektrolyt- bzw. wasserabweisende Beschichtung oder Struktur aufweisen, so daß sie eine spezielle, im wesentlichen von Elektrolyt freie Gastransporteinrichtung zur Führung des Wasserstoffes bzw. Sauerstoffes von der Elektrolysezelleneinheit 2 zu dem Wasserstoffsammelraum 7 bzw. Sauerstoffsammelraum 9 bilden können.

Es ist selbstverständlich auch möglich, modifizierte Schlingersiebe bzw. Schlingerschutzeinrichtungen einzusetzen, wie z.B. poröse Keramikkörper oder Zellwabenkörper, die zu einer entsprechenden Unterteilung des Innenraumes der Elektrolyt-/Gas-Führungsanordnungen 3a, 3b führen und Bewegungen des Elektrolytflüssigkeitskörpers dämpfen. Als Elektrolyt kann auch wässrige Kaliumlauge verwendet werden.

In den Fig. 2 und 3 sind zwei Ausführungsbeispiele für eine mögliche Verbindung des Elektrolyseurs nach Fig. 1 mit einer Brennkraftmaschine 21 und deren zugehörigem Abgassystem 15 beispielshaft in schematischer Darstellung gezeigt.

In Fig. 2 ist der Elektrolyseur 1, der hinsichtlich seiner Anoden mit dem Plus-Pol der Lichtmaschine 4 und hinsichtlich seiner Kathoden mit dem Minus-Pol an Fahrzeugmasse gelegt ist, so angeordnet, daß die Wasserstoffleitung 10 stromauf eines Rußfilters 16 in eine Abgasleitung 17 eines Dieselmotors 21 mündet. Weitere Elemente des Abgassystemes 15, wie Abgasturboiader oder Katalysator, sind hier nicht dargestellt. Auf diese Weise wird dem Abgas des Dieselmotors 21 unmittelbar freier Wasserstoff als Reduktionsmittel der Stickoxide NOₓ zugeführt, so daß eine wesentliche und weitgehende Spaltung der Stickoxide in Stickstoff und Wasserdampf erfolgt.

Die Sauerstoff leitung 11 mündet stromauf einer Drosselklappe 18 in den Ansaugkanal 19 des Dieselmotors 21 und dient so einer verbesserten Gemischbildung. Der Elektrolyseur 1 ist in den Kühlwasserkreislauf des Dieselmotors 21 eingeschaltet, wie hier durch die Kühlwasserleitungen 12, 13 verdeutlicht wird. Auf diese Weise dient der Kühlwasserkreislauf auch zur Regelung der Betriebstemperatur des Elektrolyseurs 1. Der Elektrolyseur 1 wird durch die Kühltemperaturregelung schnell auf eine Betriebstemperatur erwärmt und konstant auf dieser gehalten, so daß eine optimale Arbeitsweise gesichert und eine Übertemperierung des Elektrolyten 8 (Wasser bzw. wässrige Kaliumlauge) vermieden wird.

In einer alternativen Ausführungsform gemäß Fig. 3 wird der in dem Elektrolyseur 1 entstehende Sauerstoff zur Temperaturerhöhung und damit zur Vergrößerung des Trocknungsgradienten für Rußpartikel in dem Rußfilter 16 verwendet. Auch in diesem Fall könnte Sauerstoff zusätzlich in das Ansaugsystem der Brennkraftmaschine 21 gegeben werden. Der Wasserstoff wird wiederum stromauf des Rußfilters 16 und in diesem Fall stromauf eines zusätzlich im Abgassystem stromauf des Rußfilters angeordneten Katalysators 20 in die Abgasleitung 17 zur NOₓ-Spaltung eingespeist.

Selbstverständlich kann bei Brennkraftmaschinen, die keinen Rußfilter verwenden, insbesondere für Ottomotoren, die Wasserstoff-Einspeisung in das Abgassystem 15 auch an anderen Stellen, z.B. stromauf des Katalysators und/oder stromauf eines hier nicht dargestellten Abgasturboladers erfolgen.

Der Sauerstoff kann auch direkt an die Umgebungsatmosphäre oder an z.B. ein Druckreservoir, das als Luftspeicher für eine Luft/Kraftstoffeinspritzeinheit dient, abgegeben werden.

Durch die Spannungsversorgung des Elektrolyseurs 1 von der Lichtmaschine 4 her wird erreicht, daß die Wasserstofferzeugung unmittelbar nach Start des Motors beginnt und auch bereits eine NOₓ-Reinigung erfolgt, wenn z.B. ein Katalysator seine Betriebstemperatur noch nicht erreicht hat. Daher wird durch die unverzügliche H₂-Einspeisung in das Abgas der NOₓ-Anteil gerade in dem besonders kritischen Bereich vermindert, indem weitere Abgasreinigungssysteme noch nicht oder nur eingeschränkt wirksam sind.

Die Einspeisung des elektrolytisch erzeugten Wasserstoffs in das Abgas bzw. die Vermischung mit diesem kann auch an anderen Stellen, z.B. nahe des Abgaskrümmers, dicht am Motorblock oder stromab eines gegebenenfalls vorgesehenen Katalysators erfolgen.

Durch die an den Betrieb der Lichtmaschine 4 gekoppelte, elektrolytische Wasserstoff-Erzeugung wird zugleich sichergestellt, daß kein Wasserstoff bei Stillstand der Brennkraftmaschine 21 erzeugt wird, so daß auch keine Probleme hinsichtlich der Bildung von gegebenenfalls gefährlichen Wasserstoff/Luft-Gemischen bestehen.

Die Anwendung der direkten Einspeisung nicht gebundenen Wasserstoffs in das Abgas eines Verbrennungsmotors ist auch nicht auf die Anwendung für Otto- oder Dieselmotoren beschränkt, sondern kann auch für Gasmotoren eingesetzt werden.

Die Verwendung des Sauerstoffs zur Trocknung der Rußpartikel in einem im Abgassystem 15 vorgesehenen Rußfilter 16 ist besonders vorteilhaft, da sich gezeigt hat, daß diese Rußpartikel als Katalysator für die Beförderung der Reduktion von NOₓ durch die Zugabe von H₂ zu N₂ und H₂O (Dampf) besonders wirksam sind, wobei diese Katalysatorfunkion bei sehr trockenen, heißen Rußpartikeln größer ist, als wenn diese einen geringeren Trocknungsgrad aufweisen.

Gegebenenfalls kann der Sauerstoff auch an andere, sauerstoffverbrauchende Systeme des Kraftfahrzeuges abgegeben werden.

## Patentansprüche

1. Verfahren zum Reinigen der Abgase von Brennkraftmaschinen von Stickoxiden (NOₓ), bei dem Wasserstoff in Abhängigkeit von einem Betrieb der Brennkraftmaschine (14) in einem Elektrolyseur (1) elektrolytisch erzeugt und zur Hydrierung der Stick-oxide (NOₓ) mit dem Abgas der Brennkraftmaschine vermischt wird, **dadurch gekennzeichnet,** daß Wasserstoff und Sauerstoff in einer unteren Elektrolysezelleneinheit (2) erzeugt und durch eine über der Elektrolysezelleneinheit (2) befindliche Elektrolytspeichereinheit (14, 8) hindurch in einen mit separierten Gasausgängen verbundenen, elektrolytfreien Raum des Elektrolyseurs (1) geführt werden.

2. Verfahren nach Anspruch 1 für eine Brennkraftmaschine mit einem Abgasturbolader, **dadurch gekennzeichnet,** daß der Wasserstoff dem Abgas stromauf des Abgasturboladers zugesetzt wird.

3. Verfahren nach Anspruch 1 oder 2 für eine Brennkraftmaschine mit Katalysator im Abgassystem, **dadurch gekennzeichnet,** daß der Wasserstoff dem Abgasstrom stromauf des Katalysators (20) zugesetzt wird.

4. Verfahren nach zumindest einem der vorhergehenden Ansprüche 1-3, **dadurch gekennzeichnet,** daß der bei der elektrolytischen Erzeugung des Wasserstoffs in der Elektrolysezelle (2) entstehende Sauerstoff in einen Luftansaug- oder Gemischbildungsbereich stromauf der Verbrennungskammer der Brennkraftmaschine (21) eingespeist wird.

5. Verfahren nach zumindest einem der vorhergehenden Ansprüche 1-4, **dadurch gekennzeichnet,** daß der bei der elektrolytischen Erzeugung des Wasserstoffs in der Elektrolysezelle (2) entstehende Sauerstoff direkt in eine Verbrennungskammer der Brennkraftmaschine eingespeist wird.

6. Verfahren nach zumindest einem der vorhergehenden Ansprüche 1-5, insbesondere für Dieselmotoren, mit einem Rußfilter im Abgassystem, **dadurch gekennzeichnet,** daß der bei der elektrolytischen Erzeugung des Wasserstoffs in der Elektrolysezelle (2) entstehende Sauerstoff dem Rußfilter (16) oder einem Abgasrohr (17) benachbart stromauf zu diesem zur thermischen Trocknung von Rußpartikeln in dem Rußfilter (16) zugeführt wird.

7. Verfahren nach zumindest einem der vorhergehenden Ansprüche 1-6, **dadurch gekennzeichnet,** daß die Elektrolysezelle (2) an eine fahrzeugeigene Spannungsquelle, insbesondere eine Lichtmaschine (4) eines Kraftfahrzeuges, angeschlossen wird.

8. Verfahren nach zumindest einem der vorhergehenden Ansprüche 1-7, **dadurch gekennzeichnet,** daß die Einspeisung von Wasserstoff in das Abgassystem (15) der Brennkraftmaschine (21) unmittelbar nach Starten der Brennkraftmaschine (21) und vor Erreichen einer Betriebstemperatur eines Katalysators (20) beginnt.

9. Einrichtung zum Reinigen der Abgase von Brennkraftmaschinen, insbesondere zum Abbau von Stickoxiden (NOₓ), wobei ein Elektrolyseur mit zumindest einer Elektrolysezelle (2) zur Wasserstofferzeugung vorgesehen und eine mit dem Elektrolyseur (1) verbundene Wasserstoff leitung (10) mit einem Abgassystem (12) der Brennkraftmaschine (21) stromauf eines Katalysators (20) verbunden ist, gemäß Verfahren nach Anspruch 1, **dadurch gekennzeichnet,** daß der Elektrolyseur (1) eine untere Elektrolysezelleneinheit (2) und oberhalb derselben eine Elektrolytspeichereinheit (14, 8) aufweist.

10. Einrichtung nach Anspruch 9, **dadurch gekennzeichnet,** daß die Wasserstoffleitung (10) in eine Abgasleitung (17) des Abgassystemes (15) der Brennkraftmaschine (21) mündet.

11. Einrichtung nach Anspruch 9 oder 10, **dadurch gekennzeichnet,** daß die Elektrolytspeichereinheit (3) eine sauerstoffabführende Elektrolyt-/Gas-Führungsanordnung (3b) mit einem Demister (9) und eine wasserstoffabführende Elektrolyt-/Gas-Führungsanordnung (3a) mit einem Demister und eine wasserstoffabführende Elektrolyt-/Gas-Führungsanordnung (3a) mit einem Demister (7) aufweist.

12. Einrichtung nach zumindest einem der vorhergehenden Ansprüche 9 bis 11, **dadurch gekennzeichnet,** daß die Elektrolytspeichereinheit (3) eine Schlingerschutzeinrichtung (14) aufweist.

13. Einrichtung nach Anspruch 12, **dadurch gekennzeichnet,** daß die Schlingerschutzeinrichtung (14) aus einem gas- und flüssigkeitspermeablen Material besteht.

14. Einrichtung nach Anspruch 13, **dadurch gekennzeichnet,** daß die Schlingerschutzeinrichtung aus porösem Keramikmaterial besteht.

15. Einrichtung nach Anspruch 14, **dadurch gekennzeichnet,** daß die Schlingerschutzeinrichtung eine Kapillarspalten bildende Plattenanordnung (14) mit vertikaler Gasförderrichtung ist.

16. Einrichtung nach Anspruch 15, **dadurch gekennzeichnet,** daß die Plattenanordnung (14) Kapillarspalte bildet.

17. Einrichtung nach Anspruch 15 oder 16, **dadurch gekennzeichnet,** daß die Plattenanordnung (14) im wesentlichen elektrolytfreie, hydrophobe Gastransportbereiche aufweist.

18. Einrichtung nach zumindest einem der vorhergehenden Ansprüche 9-17, **dadurch gekennzeichnet,** daß die Elektrolytspeichereinheit (3) ein Schwimmerventil (6) zur Füllstandsregelung für den Elektrolyten (8) in der Elektrolytspeichereinheit (3) aufweist.

19. Einrichtung nach zumindest einem der vorhergehenden Ansprüche 9-18, **dadurch gekennzeichnet**, daß die Elektrolytspeichereinheit (3) mit einem Kühlwasserkreislauf der Brennkraftmaschine (21) verbunden ist.

20. Einrichtung nach zumindest einem der vorhergehenden Ansprüche 9-19, **dadurch gekennzeichnet**, daß die Wasserstoffleitung (10) einerseits mit dem Demister (7) und andererseits mit der Abgasleitung (17) der Brennkraftmaschine (21), insbesondere stromauf eines Abgasturboladers oder eines Katalysators (20), verbunden ist.

21. Einrichtung nach zumindest einem der vorhergehenden Ansprüche 9-20, für eine Brennkraftmaschine mit einem Rußfilter im Abgassystem, **dadurch gekennzeichnet**, daß die Sauerstoffleitung (11) einerseits mit dem Demister (9) des Elektrolyseurs (1) und andererseits mit dem Rußfilter (16) oder stromauf benachbart zu diesem mit der Abgasleitung (17) verbunden ist.

22. Einrichtung nach zumindest einem der vorhergehenden Ansprüche 9-21, **dadurch gekennzeichnet**, daß der Elektrolyseur (1) an eine Lichtmaschine (4) der Brennkraftmaschine über eine Gleichrichtereinheit angeschlossen ist.

23. Kraftfahrzeug mit einer Brennkraftmaschine und einem Elektrolyseur zur elektrolytischen Wasserstofferzeugung, der gemäß durch eine Wasserstoffleitung (10) mit einem Abgassystem (15) der Brennkraftmaschine (21) stromauf eines Katalysators (20) verbunden ist, **dadurch gekennzeichnet**, daß der Elektrolyseur (1) horizontal in eine untere Elektrolysezelleneinheit (2) und eine obere Elektrolytspeichereinheit (3) unterteilt ist und die Elektrolysezelleneinheit (2) zumindest eine Kapillarspaltelektrode, die mit Mitteln zur separaten Führung von Elektrolyt und Reaktionsgas versehen ist, aufweist.

24. Kraftfahrzeug nach Anspruch 23, **dadurch gekennzeichnet**, daß die Wasserstoffleitung (10) mit einer Abgasleitung (17) des Abgassystems (15), insbesondere stromauf eines Abgasturboladers und/oder eines Katalysators (20) verbunden ist.

25. Kraftfahrzeug nach Anspruch 23 oder 24, **dadurch gekennzeichnet,** daß eine einerseits mit dem Elektrolyseur (1) verbundene Sauerstoffleitung (11) andererseits mit einem Luftansaug- oder Gemischbildungsbereich stromauf einer Verbrennungskammer der Brennkraftmaschine (21) und/oder mit der Verbrennungskammer und/oder mit dem Abgassystem (15), insbesondere mit einem Rußfilter (16) oder einem Abgasrohr (17) oder der Abgasleitung, verbunden ist.

26. Kraftfahrzeug nach zumindest einem der vorhergehenden Ansprüche 23-25, **dadurch gekennzeichnet,** daß der Elektrolyseur (1) in den Motorkühlkreislauf der Brennkraftmaschine (21) integriert und benachbart zu dieser angeordnet ist.

27. Kraftfahrzeug nach Anspruch 26, **dadurch gekennzeichnet,** daß die Elektrolytspeichereinheit (3) vertikal in eine sauerstoffabführende Elektrolyt-/Gas-Führungsanordnung (3b) mit einem Demister (9) und eine wasserstoffabführende Elektrolyt-/Gas-Führungsanordnung (3a) mit einem Demister (7) unterteilt ist.

28. Kraftfahrzeug nach Anspruch 26 oder 27, **dadurch gekennzeichnet,** daß die Elektrolytspeichereinheit (3) mit dem Kühlwasserkreislauf der Brennkraftmaschine (21) verbunden ist und eine Auslauf-Schutzvorrichtung, insbesondere ein Schwimmerventil (6), aufweist.

29. Kraftfahrzeug nach zumindest einem der Ansprüche 23-28, **dadurch gekennzeichnet,** daß die Elektrolytspeichereinheit (3) eine poröse, gas- und flüssigkeitspermeable Schlingerschutzeinrichtung (14) aufweist.

30. Kraftfahrzeug nach Anspruch 29, **dadurch gekennzeichnet,** daß die Schlingerschutzeinrichtung eine Kapillarspalte bildende Plattenanordnung (14) mit vertikaler Gasförderrichtung ist.

31. Kraftfahrzeug nach Anspruch 30, **dadurch gekennzeichnet,** daß die Plattenanordnung (14) hydrophobe, im wesentlichen elektrolytfreie Gastransportbereiche aufweist.

32. Kraftfahrzeug nach Anspruch 31, **dadurch gekennzeichnet,** daß die Kapillarspaltelektrode zumindest einen hydrophilen, elektrolytisch aktiven Reaktionsbereich und einen hydrophoben, elektrolytisch inaktiven Gastransportbereich aufweist, wobei der hydrophile Reaktionsbereich benachbart zu einem Separator einen diesem zugewandten Elektrodenabschnitt und der Gastransportbereich einen beabstandet zu dem Separator, von diesem abgewandten Elektrodenabschnitt bildet.

## Claims

1. A method of removing nitric oxides (NOₓ) from the exhaust gases of internal combustion engines, wherein hydrogen is produced electrolytically in an electrolyzer (I) in dependence on operation of the internal combustion engine (14) and is mixed with the internal combustion engine exhaust gas for hydrogenation of the nitric oxides (NOₓ), characterised in that hydrogen and oxygen are produced in a bottom electrolytic cell unit (2) and are passed through an electrolyte storage unit (14, 8) situated above the electrolytic cell unit into an electrolyte-free area of the electrolyzer (1), said area being connected to separate gas outlets.

2. A method according to claim 1 for an internal combustion engine having an exhaust gas turbocharger, characterised in that the hydrogen is added to the exhaust gas upstream of the exhaust gas turbocharger.

3. A method according to claim 1 or 2 for an internal combustion having a catalyst in the exhaust gas system, characterised in that the hydrogen is added to the exhaust gas flow upstream of the catalyst (20).

4. A method according to at least one of the preceding claims 1 to 3, characterised in that the oxygen forming in the electrolytic production of the hydrogen in the electrolytic cell (2) is fed into an air intake or mixture forming zone upstream of the combustion chamber of the internal combustion engine (21).

5. A method according to at least one of the preceding claims 1 to 4, characterised in that the oxygen forming in the electrolytic production of the hydrogen in the electrolytic cell (2) is fed directly into a combustion chamber of the internal combustion engine.

6. A method according to at least one of the preceding claims 1 to 5, more particularly for diesel engines, comprising a soot filter in the exhaust gas system, characterised in that the oxygen forming in the electrolytic production of the hydrogen in the electrolytic cell (2) is fed to the soot filter (16) or an exhaust gas pipe (17) adjacent upstream thereof for thermal drying of soot particles in the soot filter (16).

7. A method according to at least one of the preceding claims 1 to 6, characterised in that the electrolytic cell (2) is connected to the vehicle's own voltage supply, more particularly a motor vehicle generator (4).

8. A method according to at least one of the preceding claims 1 to 7, characterised in that the introduction of hydrogen into the exhaust gas system (15) of the internal combustion engine (21) starts immediately after the starting of the internal combustion engine (21) and before reaching an operating temperature of a catalyst (20).

9. Apparatus for purifying the exhaust gases of internal combustion engines, more particularly for degradation of nitric oxides (NOₓ), wherein an electrolyzer is provided with at least one electrolytic cell (2) for hydrogen production and a hydrogen pipeline (10) connected to the electrolyzer (1) is connected to an exhaust gas system (12) of the internal combustion engine (21) upstream of a catalyst (20), in accordance with the method of claim 1, characterised in that the electrolyzer (1) comprises a bottom electrolytic cell unit (2) and, above the same, an electrolyte storage unit (14, 8).

10. Apparatus according to claim 9, characterised in that the hydrogen pipeline (10) leads into an exhaust gas pipe (17) of the exhaust gas system (15) of the internal combustion engine (21).

11. Apparatus according to claim 9 or 10, characterised in that the electrolyte storage unit (3) comprises an oxygen-discharging electrolyte/gas guide system (3b) with a demister (9) and a hydrogen-discharging electrolyte/gas guide system (3a) with a demister and a hydrogen-discharging electrolyte/gas guide system (3a) with a demister (7).

12. Apparatus according to at least one of the preceding claims 9 to 11, characterised in that the electrolyte storage unit (3) comprises an anti-roll device (14).

13. Apparatus according to claim 12, characterised in that the anti-roll device (14) consists of a gas-permeable and liquid-permeable material.

14. Apparatus according to claim 13, characterised in that the anti-roll device consists of porous ceramic material.

15. Apparatus according to claim 14, characterised in that the anti-roll device is a plate assembly (14) which forms capillary gaps and which has a vertical direction of gas conveyance.

16. Apparatus according to claim 15, characterised in that the plate assembly (14) forms capillary gaps.

17. Apparatus according to claim 15 or 16, characterised in that the plate assembly (14) comprises substantially electrolyte-free hydrophobic gas transport zones.

18. Apparatus according to at least one of the preceding claims 9 to 17, characterised in that the electrolyte storage unit (3) has a float valve (6) for controlling the level of electrolyte (8) in the electrolyte storage unit (3).

19. Apparatus according to at least one of the preceding claims 9 to 18, characterised in that the electrolyte storage unit (3) is connected to a cooling water circuit of the internal combustion engine (21).

20. Apparatus according to at least one of the preceding claims 9 to 19, characterised in that the hydrogen pipeline (10) is connected on the one hand to the demister (7) and on the other hand to the exhaust gas pipe (17) of the internal combustion engine (21), more particularly upstream of an exhaust gas turbocharger or a catalyst (20).

21. Apparatus according to at least one of the preceding claims 9 - 20, for an internal combustion engine having a soot filter in the exhaust gas system, characterised in that the oxygen pipeline (11) is connected on the one hand to the demister (9) of the electrolyzer (1) and on the other hand to the soot filter (16) or upstream adjacent the latter to the exhaust gas pipe (17).

22. Apparatus according to at least one of the preceding claims 9 - 21, characterised in that the electrolyzer (1) is connected to a generator (4) of the internal combustion engine through a rectifier unit.

23. A motor vehicle having an internal combustion engine and an electrolyzer for electrolytic hydrogen production, which is connected by a hydrogen pipeline (10) to an exhaust gas system (15) of the internal combustion engine (21) upstream of a catalyst (20), characterised in that the electrolyzer (1) is divided horizontally into a bottom electrolytic cell unit (2) and a top electrolyte storage unit (3) and the electrolytic cell unit (2) comprises at least one capillary gap electrode provided with means for the separate guidance of electrolyte and reaction gas.

24. A motor vehicle according to claim 23, characterised in that the hydrogen pipeline (10) is connected to an exhaust gas pipe (17) of the exhaust gas system (15), more particularly upstream of an exhaust gas turbocharger and/or of a catalyst (20).

25. A motor vehicle according to claim 23 or 24, characterised in that an oxygen pipeline (11), one end of which is connected to the electrolyzer (1), is connected at the other end to an air intake or mixture forming zone upstream of a combustion chamber of the internal combustion engine (21) and/or to the combustion chamber and/or to the exhaust gas system (15), more particularly to a soot filter (16) or an exhaust gas tube (17) or the exhaust gas line.

26. A motor vehicle according to at least one of the preceding claims 23 - 25, characterised in that the electrolyzer (1) is integrated into the engine cooling circuit of the internal combustion engine (21) and is disposed adjacent the latter.

27. A motor vehicle according to claim 26, characterised in that the electrolyte storage unit (3) is divided vertically into an oxygen-discharging electrolyte/gas guide system (3b) with a demister (9) and a hydrogen-discharging electrolyte/gas guide system (3a) with a demister (7).

28. A motor vehicle according to claim 26 or 27, characterised in that the electrolyte storage unit (3) is connected to the cooling water circuit of the internal combustion engine (21) and has an anti-dry-out device, more particularly a float valve (6).

29. A motor vehicle according to at least one of claims 23 to 28, characterised in that the electrolyte storage unit (3) comprises a porous gas-permeable and liquid-permeable anti-roll device (14).

30. A motor vehicle according to claim 29, characterised in that the anti-roll device is a plate assembly (14) which forms capillary gaps and which has a vertical direction of gas conveyance.

31. A motor vehicle according to claim 30, characterised in that the plate assembly (14) comprises hydrophobic, substantially electrolyte-free gas transport zones.

32. A motor vehicle according to claim 31, characterised in that the capillary gap electrode comprises at least one hydrophilic electrolytically active reaction zone and a hydrophobic electrolytically inactive gas transport zone, the hydrophilic reaction zone adjacent to a separator forming one electrode portion facing the same, and the gas transport zone forming an electrode portion which is spaced from and remote from the separator.

## Revendications

1. Procédé pour épurer les gaz d'échappement des moteurs à combustion interne contenant des oxydes d'azote (NOₓ), dans lequel de l'hydrogène est produit électrolytiquement en réponse au fonctionnement du moteur à combustion interne (14), dans un électrolyseur (1), et est mélangé aux gaz d'échappement du moteur à combustion interne pour l'hydrogénation des oxydes d'azote (NOₓ), caractérisé en ce que de l'hydrogène et de l'oxygène sont produits dans une unité cellule inférieure d'électrolyse (2) et transférés, à travers une unité accumulateur d'électrolyte (14, 8) qui se trouve au-dessus de l'unité cellule d'électrolyse (2), dans une chambre de l'électrolyseur (1) qui est reliée à des sorties de gaz séparées, et qui est exempte d'électrolyte.

2. Procédé selon la revendication 1, pour un moteur à combustion interne équipé d'un turbo-compresseur sur gaz d'échappement, caractérisé en ce que l'hydrogène est ajouté aux gaz d'échappement en amont du turbo-compresseur sur gaz d'échappement.

3. Procédé selon la revendication 1 ou 2, pour un moteur à combustion interne équipé d'un catalyseur dans le système de gaz d'échappement, caractérisé en ce que l'hydrogène est ajouté aux gaz d'échappement en amont du catalyseur (20).

4. Procédé selon au moins une des revendications précédentes 1-3, caractérisé en ce que l'oxygène qui se forme dans la cellule d'électrolyse (2) lors de la production électrolytique de l'hydrogène est injecté dans une région d'aspiration d'air ou de formation du mélange, en amont des chambres de combustion du moteur à combustion interne (21).

5. Procédé selon au moins une des revendications précédentes 1-4, caractérisé en ce que l'oxygène dégagé dans la cellule d'électrolyse (2) lors de la production électrolytique de l'hydrogène est injecté directement dans une chambre de combustion du moteur à combustion interne.

6. Procédé selon au moins une des revendications précédentes 1-5, en particulier pour moteurs diesel comportant un filtre à suie dans le système de gaz d'échappement, caractérisé en ce que l'oxygène dégagé dans la cellule d'électrolyse (2), lors de la production électrolytique de l'hydrogène, est envoyé au filtre à suie (16) ou à un tube de gaz d'échappement (17), à proximité en amont de ce filtre, pour la dessiccation thermique des particules de suie contenues dans le filtre à suie (16).

7. Procédé selon au moins des revendications précédentes 1-6, caractérisé en ce que la cellule d'électrolyse (2) est raccordée à une source de tension propre du véhicule, notamment à une génératrice (4) d'un véhicule automobile.

8. Procédé selon au moins une des revendications précédentes 1-7 caractérisé en ce que l'injection d'hydrogène dans le système de gaz d'échappement (15) du moteur à combustion interne (21) commence aussitôt après le démarrage du moteur à combustion interne avant qu'on ait atteint une température de fonctionnement d'un catalyseur.

9. Dispositif pour épurer les gaz d'échappement des moteurs à combustion interne, en particulier pour décomposer les oxydes d'azote (NOₓ), dans lequel il est prévu un électrolyseur possédant au moins une cellule d'électrolyse (2) pour la production d'hydrogène, et où une conduite d'hydrogène (8) reliée à l'électrolyseur (1) est reliée à un système de gaz d'échappement (12) du moteur à combustion interne (21) en amont d'un catalyseur (20), conformément au procédé selon la revendication 1, caractérisé en ce que l'électrolyseur (1) présente une unité inférieure cellule d'électrolyse (2) et , au-dessus de celle-ci, une unité accumulateur d'électrolyte (14, 8).

10. Dispositif selon la revendication 9, caractérisé en ce que la conduite d'hydrogène (10) débouche dans une conduite de gaz d'échappement (17) du système de gaz d'échappement (15) du moteur à combustion interne (21).

11. Dispositif selon la revendication 9 ou 10, caractérisé en ce que l'unité accumulateur d'électrolyte (3) présente un dispositif de conduite électrolyte/gaz (3b) qui évacue l'oxygène, et est équipé d'un nébuliseur (9), et un dispositif de conduite électrolyte/gaz (3a) qui évacue l'hydrogène et est équipé d'un dénébuliseur et un dispositif de canalisation électrolyte/gaz (3a) évacuant l'hydrogène, et équipé d'un dénébuliseur (7).

12. Dispositif selon au moins une des revendications 9 à 11, caractérisé en ce que l'unité accumulateur d'électrolyte (3) présente un dispositif de protection anti-roulis (14).

13. Dispositif selon la revendication 12, caractérisé en ce que le dispositif de protection anti-roulis (14) est constitué par une matière perméable aux gaz et aux liquides.

14. Dispositif selon la revendication 13, caractérisé en ce que le dispositif de protection anti-roulis est constitué par une matière céramique poreuse.

15. Dispositif selon la revendication 14, caractérisé en ce que le dispositif de protection anti-roulis est un ensemble de plaques (14) formant des fentes capillaires, présentant une direction verticale de transport des gaz.

16. Dispositif selon la revendication 15, caractérisé en ce que l'ensemble de plaques (14) forme des fentes capillaires.

17. Dispositif selon la revendication 15 ou 16, caractérisé en ce que l'ensemble de plaques (14) présente des régions hydrophobes de transport des gaz, sensiblement exemptes d'électrolyte.

18. Dispositif selon au moins une des revendications précédentes 9-17, caractérisé en ce que l'unité accumulateur d'électrolyte (3) présente une soupape à flotteur (6) pour la régulation du niveau de remplissage de l'électrolyte (8) dans l'unité accumulateur d'électrolyte (3).

19. Dispositif selon au moins une des revendications précédentes 9-18, caractérisé en ce que l'unité accumulateur d'électrolyte (3) est reliée à un circuit d'eau de refroidissement du moteur à combustion interne (21).

20. Dispositif selon au moins une des revendications précédentes 9-19, caractérisé en ce que la conduite d'hydrogène (10) est reliée, d'une part, au dénébuliseur (7) et, d'autre part, à la conduite de gaz d'échappement (17) du moteur à combustion interne (21), en particulier en amont d'un turbo-compresseur sur gaz d'échappement ou d'un catalyseur (20).

21. Dispositif selon au moins une des revendications précédentes 9-20, pour moteur à combustion interne comprenant un filtre à suie dans le système de gaz d'échappement, caractérisé en ce que la conduite d'oxygène (11) est reliée, d'une part, au dénébuliseur (9) de l'électrolyseur (1) et, d'autre part, au filtre à suie (16) ou à la conduite de gaz d'échappement (17) en un point en amont et à proximité de ce filtre.

22. Dispositif selon au moins une des revendications précédentes 9-21, caractérisé en ce que l'électrolyseur (1) est connecté à une génératrice (4) du moteur à combustion interne à travers une unité redresseur.

23. Véhicule équipé d'un moteur à combustion interne et d'un électrolyseur servant à la production électrolytique d'hydrogène, qui est relié, par une conduite d'hydrogène (10), à un système de gaz d'échappement (15) du moteur à combustion interne (21), en amont d'un catalyseur (20), caractérisé en ce que l'électrolyseur (1) est subdivisé horizontalement en une unité inférieure cellule d'électrolyse (2) et une unité supérieure accumulateur d'électrolyte (3), et l'unité cellule d'électrolyse (2) présente au moins une électrode à fente capillaire qui est munie de moyens servant à conduire séparément l'électrolyte et les gaz de réaction.

24. Véhicule automobile selon la revendication 23, caractérisé en ce que la conduite d'hydrogène (10) est reliée à une conduite de gaz d'échappement (17) du système de gaz d'échappement (15), en particulier en amont d'un turbo-compresseur sur gaz d'échappement et/ou d'un catalyseur (20).

25. Véhicule automobile selon la revendication 23 ou 24, caractérisé en ce qu'une conduite d'oxygène (11) reliée, d'une part, à l'électrolyseur (1) est reliée, d'autre part, à une région d'aspiration d'air ou de formation du mélange en amont d'une chambre de combustion du moteur à combustion interne (21) et/ou à la chambre de combustion et/ou au système de gaz d'échappement (15), en particulier à un filtre à suie (16) ou à un tube de gaz d'échappement (17) ou à la conduite de gaz d'échappement.

26. Véhicule automobile selon au moins une des revendications 23 à 25, caractérisé en ce que l'électrolyseur (1) est intégré dans le circuit de refroidissement du moteur à combustion interne (21) et est disposé à proximité de ce moteur.

27. Véhicule automobile selon la revendication 26, caractérisé en ce que l'unité accumulateur d'électrolyte (3) est subdivisée verticalement en un dispositif de guidage électrolyte/gaz (3b) qui évacue l'oxygène et est muni d'une dénébuliseur (9), et un dispositif de guidage électrolyte/gaz (3a) qui évacue l'hydrogène et est muni d'un dénébuliseur (7).

28. Véhicule automobile selon la revendication 26 ou 27, caractérisé en ce que l'unité accumulateur d'électrolyte (3) est reliée au circuit d'eau de refroidissement du moteur à combustion interne (21) et présente un dispositif de protection de sortie, en particulier une soupape à flotteur (6).

29. Véhicule automobile selon au moins un des revendications 23-28, caractérisé en ce que l'unité accumulateur d'électrolyte (23) présente un dispositif (14) de protection anti-roulis poreux, perméable aux gaz et aux liquides.

30. Véhicule automobile selon la revendication 29, caractérisé en ce que le dispositif de protection anti-roulis est un ensemble de plaques (14) formant des fentes capillaires, avec direction verticale de transport des gaz.

31. Véhicule automobile selon la revendication 30, caractérisé en ce que l'ensemble de plaques (14) présente des régions de transport des gaz hydrophobes, sensiblement exemptes d'électrolyte.

32. Véhicule automobile selon la revendication 31, caractérisé en ce que l'électrode à fente capillaire comprend au moins une région de réaction hydrophile, électrolytiquement active, et une région de transport des gaz hydrophobe, électrolytiquement inactive, la région de réaction hydrophile formant, à proximité d'un séparateur, un segment d'électrode qui se dirige vers ce séparateur et la région de transport des gaz formant un segment d'électrode, placé à distance du séparateur, et qui se dirige dans le sens qui s'éloigne de ce dernier.
